(19) Europäisches Patentamt
European Patent Office
Office européen des brevets

(11) **EP 2 985 564 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
***G01B 11/00*** *(2006.01)*     ***G01V 8/20*** *(2006.01)*

(21) Anmeldenummer: **14181129.9**

(22) Anmeldetag: **15.08.2014**

(54) **Lichtgitter**

Light barrier

Barrière photoélectrique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.02.2016 Patentblatt 2016/07**

(73) Patentinhaber: **SICK AG**
**79183 Waldkirch (DE)**

(72) Erfinder:
• **Bürger, Jürgen**
**79331 Nimburg (DE)**

• **Eble, Johannes**
**79183 Waldkirch (DE)**
• **Kienzler, Stefan**
**79874 Breitnau (DE)**

(74) Vertreter: **Rieger, Daniel-Stephan**
**Sick AG**
**Intellectual Property**
**Erwin-Sick-Straße 1**
**79183 Waldkirch (DE)**

(56) Entgegenhaltungen:
**DE-A1- 10 038 025     JP-A- 2011 130 258**
**US-A1- 2011 290 989**

Printed by Jouve, 75001 PARIS (FR)

**Beschreibung**

Die vorliegende Erfindung betrifft ein Lichtgitter zur Bestimmung mindestens einer Kantenposition von Objekten nach dem Oberbegriff von Anspruch 1 und ein Verfahren zur Bestimmung mindestens einer Kantenposition von Objekten nach dem Oberbegriff von Anspruch 6.

Lichtgitter oder Automatisierungslichtgitter werden zur Bestimmung von Objekthöhen und/oder Objektbreiten als Messsysteme eingesetzt. Beispielsweise kann die Höhe und/oder Breite von Paketen bestimmt werden.

Aus dem Stand der Technik sind Kantenregler bekannt, die eine Kante einer Materialbahn erfassen können. Diese gibt es in einem sogenannten Auflichtverfahren oder Durchlichtverfahren, beispielsweise in einer Gabellichtschrankenanordnung. Eine Bahnbreite wird dabei nicht als Ganzes erfasst, sondern es werden meist jeweils die Kanten der Bahn mit zwei einzelnen Sensoren überwacht.

Weiter werden auch Lichtgitter zur Kantenregelung eingesetzt. Die Lichtgitter werden immer dann eingesetzt, wenn die Kantenposition sehr stark schwankt, da der Messbereich der Standard-Kantenregler sehr stark eingeschränkt ist.

Die Kantenregler bzw. die Lichtgitter erfassen in der Regel nur eine Kante und müssen im Falle eines Produktwechsels bzw. Materialwechsels neu an die jeweilige Bahnbreite angepasst werden.

Ein Hauptproblem liegt jedoch in der Erfassung von teiltransparenten Objekten. Bei diesen Objekten ist die Kantenauflösung meist nicht mehr gegeben. Das Problem wird noch verschärft, wenn das Material für das Licht aufstreuende Eigenschaften aufweist.

Hierbei kann die Kante nicht mehr sicher detektiert werden. Dies gilt sowohl für Kantenregler in einer Gabellichtschrankenanordnung, als auch für ein Auflichtverfahren, wo sich spiegelnde Eigenschaften eines Objekts sehr stark auswirken. Hat das Material des Objektes mehrere Kantenübergänge, beispielsweise bei einem Folienüberstand mit verschweißtem Kunststoff, lässt sich eine Kante nicht sicher erkennen.

Die DE 100 38 025 A1 offenbart ein Lichtgitter zur Randbereichserkennung von Objekten. Dabei unterscheidet das Lichtgitter zwischen freien, unterbrochenen und abgeschwächten Strahlen.

Die JP 2011 130 258 A offenbart einen Überwachungssensor mit einer Mehrzahl von ersten Sensoren und einer Mehrzahl von zweiten Sensoren.

Die US 2011/290989 A1 offenbart einen optoelektronischen Sensor zur Erkennung von Objektkanten von relativ zu dem Sensor bewegten Objekten.

Eine Aufgabe der Erfindung besteht darin, eine genaue Kantenbestimmung von Objekten durchzuführen, insbesondere von teiltransparenten Objekten und/oder glänzenden Objekten. Eine weitere Aufgabe besteht darin, eine genaue Breitenbestimmung auch an schwierigen Objektoberflächen zu ermöglichen, wie z. B. an teiltransparenten Folien und teiltransparenten Strukturen. Eine weitere Aufgabe besteht darin, Bahnbreiten von Folien, Papier oder anderen Bahnmaterialien zu überwachen.

Teiltransparente Objektkanten sind optisch sehr schwierig zu erfassen, da diese zum einen wenig Lichtdämpfung aufweisen und zum anderen beim Lichtdurchtritt von Lichtstrahlen eines Sender-Empfänger-Systems lichtstreuende Eigenschaften besitzen. Dieser Effekt verstärkt sich, wenn die teiltransparenten Objekte eine Struktur, z. B. eine Webstruktur aufweisen.

Die Aufgabe wird gemäß Anspruch 1 gelöst durch Lichtgitter zur Bestimmung mindestens einer Kantenposition von Objekten, wobei das Lichtgitter ein erstes Gehäuse aufweist mit Lichtsendern und/oder Lichtempfängern, wobei das Lichtgitter ein zweites Gehäuse aufweist mit Lichtsendern und/oder Lichtempfängern, wobei jeweils ein Lichtsender des einen Gehäuses und ein Lichtempfänger des anderen Gehäuses gegenüberliegend angeordnet sind, wobei zwischen einem Lichtsender und mindestens einem gegenüberliegenden Lichtempfänger eine Lichtschranke mit einer Lichtstrahlkeule gebildet ist, wobei sich die Lichtstrahlkeulen benachbarter Lichtschranken überdecken, wobei eine Steuer- und Auswerteeinheit vorgesehen ist, wobei die Steuer- und Auswerteeinheit dazu ausgebildet ist, die Lichtstrahlkeulen der Lichtschranken einzeln zu aktivieren, wobei die Steuer- und Auswerteeinheit dazu ausgebildet ist, eine empfangene Lichtleistung bei freier, nicht unterbrochener Lichtstrahlkeule zwischen Lichtsender und Lichtempfänger auf einen Wert zu normieren, die Steuer- und Auswerteeinheit dazu ausgebildet ist, die Lichtleistung der Lichtstrahlkeulen zu bestimmen, wenn ein Objekt zwischen dem ersten Gehäuse und dem zweiten Gehäuse angeordnet ist und einen maximalen Unterschied der empfangenen Lichtleistung einer Lichtstrahlkeule einer Lichtschranke und mindestens einer übernächsten Lichtstrahlkeule einer anderen Lichtschranke zu bestimmen, wobei die Steuer- und Auswerteeinheit alle Lichtschranken des Lichtgitters berücksichtigt.

Weiter wird die Aufgabe gelöst durch ein Verfahren zur Bestimmung mindestens einer Kantenposition von Objekten mit einem Lichtgitter, wobei das Lichtgitter ein erstes Gehäuse aufweist mit Lichtsendern und/oder Lichtempfängern, wobei das Lichtgitter ein zweites Gehäuse aufweist mit Lichtsendern und/oder Lichtempfängern, wobei jeweils ein Lichtsender des einen Gehäuses und ein Lichtempfänger des anderen Gehäuses gegenüberliegend angeordnet werden, wobei zwischen einem Lichtsender und mindestens einem gegenüberliegenden Lichtempfänger eine Lichtschranke mit einer Lichtstrahlkeule gebildet wird, wobei sich die Lichtstrahlkeulen benachbarter Lichtschranken überdecken, wobei die Lichtstrahlkeulen der Lichtschranken einzeln aktiviert werden, wobei eine empfangene Lichtleistung bei freier, nicht unterbrochener Lichtstrahlkeule zwischen Lichtsender und Lichtempfänger auf einen Wert normiert werden, die Lichtleistung der Lichtstrahlkeulen bestimmt werden, wenn ein Objekt zwischen dem ersten Gehäuse und dem zweiten Gehäuse angeordnet ist, und ein maximaler Unterschied der empfangenen Lichtleistung einer Lichtstrahlkeule einer Lichtschranke und mindestens einer übernächsten Lichtstrahlkeule einer anderen Lichtschranke bestimmt wird, wobei alle Lichtschranken des Lichtgitters berücksichtigt werden.

Gemäß der Erfindung ist zunächst kein bestimmter Schwellwert zur Objekterkennung notwendig, sondern es wird lediglich ein maximaler Unterschied der empfangenen Lichtleistung bzw. maximaler Lichtleistungsunterschied erfasst und ausgewertet.

Dadurch ist es gemäß der Erfindung möglich, sehr kleine Signaländerungen bei einer Objektkante zu erkennen. D. h. sehr transparente Objekte, welche z. B. 80% bis 90% des Lichtsignals durchlassen, können gemäß der Erfindung erkannt werden und deren Position festgestellt werden.

Bedingt durch die verwendeten Materialien des Objektes kann sich vor der Kante erst einmal eine Signalerhöhung ergeben. Dieser Effekt wird auch als Streuscheibeneffekt bezeichnet. Je nach verwendeten Materialien des Objektes kommt es zu verschieden starken Abdeckgraden, also zu verschiedenen Abstufungen des prozentuellen Signalwerts im Kantenübergang. Da jedoch gemäß der Erfindung lediglich der maximale Lichtleistungsunterschied erfasst und ausgewertet wird, hat die Signalerhöhung aufgrund des Streuscheibeneffekts keinen Einfluss auf die Kantendetektion.

Gemäß der Erfindung können auch mehrere Kanten detektiert werden. Zum einen können gemäß der Erfindung beide das Objekt begrenzende Objektkanten gleichzeitig durch ein einziges Lichtgitter detektiert werden. Weiter kann das Objekt auch mehrere Kanten in Form einer abgestuften Kante aufweisen, beispielsweise durch einen flächigen Randbereich des Objektes der eine andere Lichtdurchlässigkeit, insbesondere eine höhere Lichtdurchlässigkeit aufweist als das Objekt selbst. Dadurch sind also zwei Kantenbereiche gebildet, die räumlich dicht aufeinander folgen, die jedoch beide durch das Lichtgitter detektierbar sind.

In Weiterbildung der Erfindung ist zur Bestimmung der Kantenposition die Steuer- und Auswerteeinheit dazu ausgebildet, eine Teilabdeckung mindestens einer Lichtschranke auszuwerten, wobei die auszuwertende Lichtschranke oder die auszuwertenden Lichtschranken zwischen den Lichtschranken mit dem maximalen Unterschied der empfangenen Lichtleistung liegt bzw. liegen.

Gemäß dieser Ausführung braucht die Lichtschranke, welche zwischen der Lichtstrahlkeule der Lichtschranke und mindestens einer übernächsten Lichtstrahlkeule der anderen Lichtschranke liegt, die einen maximalen Unterschied der empfangenen Lichtleistung aufweisen, nur teilweise abgedeckt zu sein, um eine Auswertung zu ermöglichen.

In Weiterbildung der Erfindung ist die Steuer- und Auswerteeinheit dazu ausgebildet zur Bestimmung der Kantenposition einen Schwellwert zu bilden, wobei der Schwellwert zwischen der Lichtleistung der Lichtstrahlkeule einer Lichtschranke und der Lichtleistung der übernächsten Lichtstrahlkeule einer Lichtschranke liegt, die einen maximalen Unterschied der empfangenen Lichtleistung zueinander aufweisen. Dabei wird mindestens eine Lichtstrahlkeule, bzw. ein Lichtstrahlbündel, bzw. ein Kanal mindestens einer Lichtschranke bestimmt, deren bzw. dessen Abdeckungsgrad eine Grundlage für die Berechnung der Kantenposition darstellt. Dabei erfolgt die Auswahl der Lichtstrahlkeule derart, dass die Lichtstrahlen der Lichtstrahlkeule, deren Abdeckungsgrad dem Schwellwert am nächsten kommen, für eine Auswertung verwendet werden.

Gemäß dieser Ausführung der Erfindung wird eine Schwelle zur Detektion des Objektes durch das Objekt selbst bestimmt. Die Schwelle zur Detektion des Objektes wird durch den maximalen Lichtleistungsunterschied einer Lichtstrahlkeule einer Lichtschranke und einer übernächsten Lichtstrahlkeule einer anderen Lichtschranke bestimmt.

Jeder Lichtstrahl wird bei einem freien Lichtweg zwischen Lichtsender und Lichtempfänger beispielsweise auf einen Wert von 100% normiert und eingelernt. Eine Schwelle zur Kantenbestimmung wird dann prozentual gegenüber dem Einlernwert von 100% so eingestellt, dass sich die größte prozentuale Abweichung von Strahlachse zu Strahlachse gegenüber dem Einlernwert ergibt. Als weitere Bedingung kann optional vorgesehen sein, dass der ermittelte Wert bei einer Objekterkennung kleiner als 100% ist.

Die Schwelle, welche den Kantenübergang beschreibt, wird dabei materialabhängig prozentual so eingestellt, dass sich diese Schwelle genau zwischen dem Signal Lichtweg frei, also beispielsweise 100% Lichtleistung und dem prozentualen Wert des sicher abgedeckten Strahles befindet.

Die Position der Kante kann gemäß der Erfindung einmalig bestimmt werden oder auch im laufenden Prozess bei einem sich ständig bewegenden Objekt laufend bestimmt werden. Dabei wird die Kantenposition aus den beiden Signalwerten ermittelt, also den beiden Werten mit dem maximalen Unterschied der empfangenen Lichtleistung, zwischen denen dann der Schwellwert zur Kantenbestimmung liegt.

In Weiterbildung der Erfindung ist die Steuer- und Auswerteeinheit dazu ausgebildet zur Bestimmung der Kantenposition einen Schwellwert zu bilden, wobei der Schwellwert ein Mittelwert ist aus der Lichtleistung der Lichtstrahlkeule einer Lichtschranke und der Lichtleistung der übernächsten Lichtstrahlkeule einer Lichtschranke, die einen maximalen Unterschied der empfangenen Lichtleistung zueinander aufweisen. Gemäß dieser Ausführung der Erfindung wird eine einfache lineare Interpolation durchgeführt, um eine Kantenbestimmung durchzuführen.

In Weiterbildung der Erfindung ist vor den Lichtsendern bzw. Lichtempfängern eine Optik angeordnet, wobei die Optiken in Richtung einer Längsachse der Gehäuse überlappend angeordnet sind. Durch die Optik kann die Position, die Ausrichtung und die Art der Lichtstrahlkeule bestimmt bzw. ausgebildet werden.

In Weiterbildung ist zwischen einem Lichtsender und mindestens zwei gegenüberliegenden Lichtempfängern jeweils eine Lichtschranke mit jeweils einer Lichtstrahlkeule gebildet, oder zwischen einem Lichtempfänger und mindestens zwei gegenüberliegenden Lichtsendern jeweils eine Lichtschranke mit jeweils einer Lichtstrahlkeule gebildet, wobei die wirksamen Lichtstrahlkeulen der Lichtschranken in einem Winkel zueinander angeordnet sind. Gemäß dieser Ausführung der Erfindung werden Kreuzstrahlen gebildet, wodurch eine feinere Auflösung des Lichtgitters erreicht wird. Durch die Kreuzstrahlen werden die vorhandenen Lichtsender und Lichtempfänger miteinander kombiniert, wodurch ohne zusätzliche Lichtsender und Lichtempfänger eine höhere bzw. feinere Auflösung erreicht wird.

In Weiterbildung der Erfindung ist das Objekt außerhalb einer Mitte zwischen den Lichtgittergehäusen des Lichtgitters angeordnet. Dabei wird das Objekt an der Stelle des Lichtgitters angeordnet, an der die Auflösung des Lichtgitters durch die gekreuzten Lichtstrahlkeulen am höchsten ist. Eine Reihenfolge der Abdeckung der Lichtstrahlen der Lichtstrahlkeulen, bzw. Lichtstrahlbündel oder Kanäle ist dabei abhängig von einer Position des Objektes zwischen dem ersten Gehäuse und dem zweiten Gehäuse, da die Lichtstrahlen der Lichtstrahlkeulen je nach Objektanordnung an der Objektposition eine andere Lage im aufweisen.

Gemäß der Erfindung kann die Position einer Kante eines Objektes, insbesondere eines teiltransparenten Objektes oder eines in einer transparenten Folie eingeschweißten Objektes bestimmt werden.

Die Erfindung kann auch angewendet werden bei spiegelnden Objekten. Dann werden die Lichtsender und Lichtempfänger auf der gleichen Seite des Objektes angeordnet.

Die Erfindung kann jedoch auch bei nichttransparenten Objekten, wie beispielsweise Objekten aus Holz oder Metall eingesetzt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Figur 1          ein Lichtgitter zur Kantenbestimmung;

Figur 2          einen Ausschnitt eines Lichtgitter zur Kantenbestimmung mit dargestelltem Streueffekt;

Figur 3          Signalwerte von verschiedenen Lichtsender/Lichtempfängerpaaren des Lichtgitters;

Figur 4          normierte Signalwerte von Lichtempfängern;

Figur 5          Signalwerte von verschiedenen Lichtsender/Lichtempfängerpaaren des Lichtgitters;

Figur 6 bis 8    verschiedene erfindungsgemäße Lichtgitter;

Figur 9          ein Lichtgitter zur Kantenbestimmung an einem Objekt mit einem Rollenförderer;

Figur 10         ein Lichtgitter zur Kantenbestimmung an einem Objekt mit jeweils einer Doppelkante auf jeder Seite;

Figur 11         ein Lichtgitter mit schematisch dargestellten Kreuzstrahlen;

Figur 12         ein Lichtgitter gemäß Figur 11 mit vereinfacht dargestellten Kreuzstrahlen;

Figur 13         ein Lichtgitter gemäß Figur 12 mit einem Objekt zur Darstellung der Kantenbestimmung;

Figur 14 bis 16  eine Darstellung der Lichtachsen bei einer Kantenbestimmung je eines Objektes mit je verschiedenen Transparenzgraden:

In den nachfolgenden Figuren sind identische Teile mit identischen Bezugszeichen versehen.

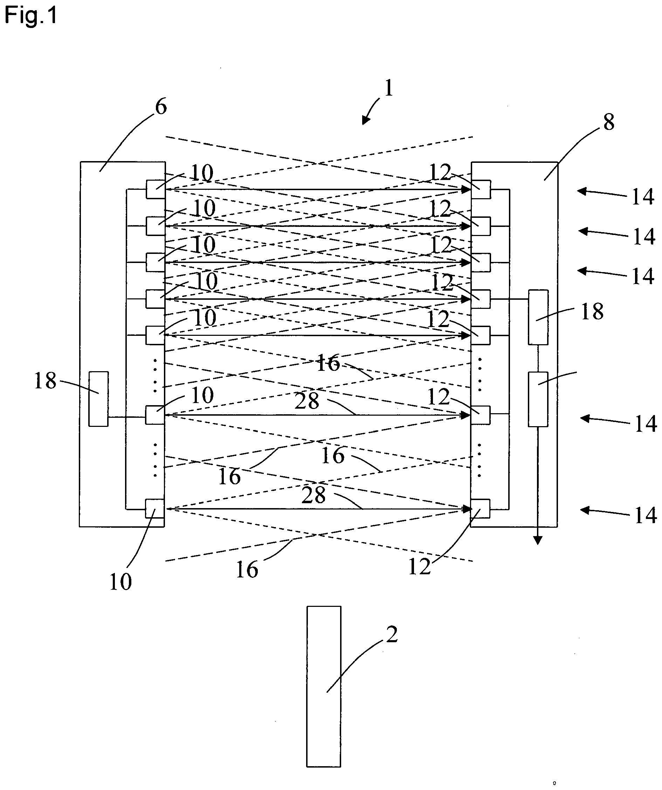

Figur 1 zeigt ein Lichtgitter zur Bestimmung mindestens einer Kantenposition von Objekten 2, wobei das Lichtgitter 1 ein erstes Gehäuse 6 aufweist mit Lichtsendern 10 und/oder Lichtempfängern 12, wobei das Lichtgitter 1 ein zweites Gehäuse 8 aufweist mit Lichtsendern 10 und/oder Lichtempfängern 12, wobei jeweils ein Lichtsender 10 des einen Gehäuses 6, 8 und ein Lichtempfänger 12 des anderen Gehäuses 8, 6 gegenüberliegend angeordnet sind, wobei zwischen einem Lichtsender 10 und mindestens einem gegenüberliegenden Lichtempfänger 12 eine Lichtschranke 14 mit einer Lichtstrahlkeule 16 gebildet ist, wobei sich die Lichtstrahlkeulen benachbarter Lichtschranken überdecken, wobei eine Steuer- und Auswerteeinheit 18 vorgesehen ist, wobei die Steuer- und Auswerteeinheit 18 dazu ausgebildet ist, die Lichtstrahlkeulen 16 der Lichtschranken 14 einzeln zu aktivieren, wobei die Steuer- und Auswerteeinheit 18 dazu ausgebildet ist, eine empfangene Lichtleistung 20 bei freier, nicht unterbrochener Lichtstrahlkeule 16 zwischen Lichtsender 10 und Lichtempfänger 12 auf einen Wert zu normieren, die Steuer- und Auswerteeinheit 18 dazu ausgebildet ist, die Lichtleistung der Lichtstrahlkeulen 16 zu bestimmen, wenn ein Objekt 2 zwischen dem ersten Gehäuse 6 und dem zweiten Gehäuse 8 angeordnet ist und einen maximalen Unterschied der empfangenen Lichtleistung einer Lichtstrahlkeule 16 einer Lichtschranke 14 und mindestens einer übernächsten Lichtstrahlkeule 16 einer anderen Lichtschranke 14 zu bestimmen, wobei die Steuer- und Auswerteeinheit 18 alle Lichtschranken 14 des Lichtgitters 1 berücksichtigt. Vor den Lichtsendern 10 bzw. Lichtempfängern 12 ist optional eine Optik angeordnet, wobei die Optiken in Richtung einer Längsachse der Gehäuse optional überlappend angeordnet sind.

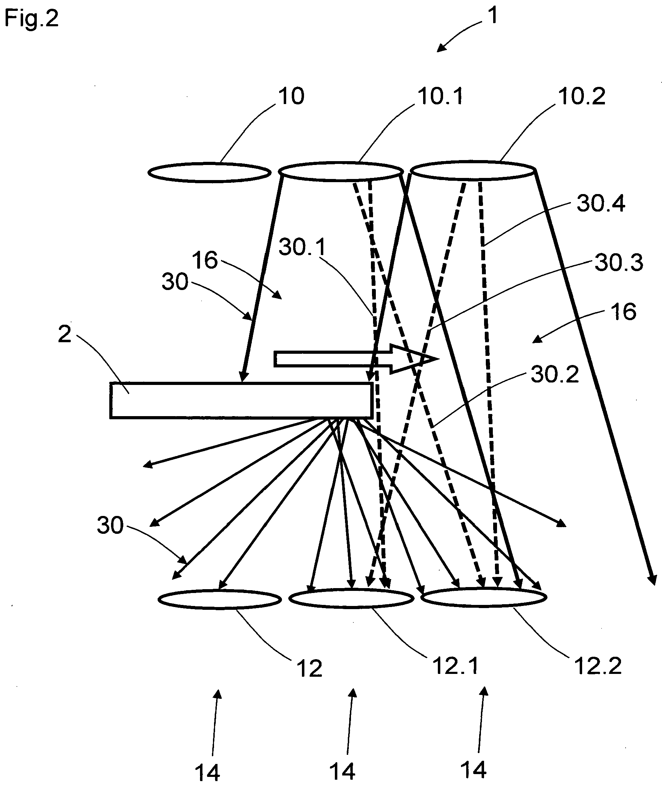

Figur 2 zeigt ein Lichtgitter 1 zur Kantenbestimmung mit dargestelltem Streueffekt. Die Lichtstrahlen 30 der Lichtstrahlkeule 16 des mittleren Lichtsenders 10.1 fallen auf das Objekt 2. Da das Objekt 2 teiltransparent ist, werden die Lichtstrahlen aufgestreut und fallen in unterschiedlichen Richtungen auf die Empfänger 12, 12.1 und 12.2. Dabei ist die exakte Position der Kante durch die gebildeten Lichtschranken 14 aus Lichtsender 10, 10.1 und 10.2 und Lichtempfänger 12, 12.1 und 12.2 zunächst nicht eindeutig ermittelbar.

Gemäß Figur 2 werden mehrere Lichtschranken 14 gebildet. Zu den Lichtschranken 14 sind beispielhaft die Lichtstrahlen 30.1, 30.2, 30.3 und 30.4 der Lichtstrahlkeulen 16 gestrichelt eingezeichnet. So bildet der Lichtsender 10.1 und der Lichtempfänger 12.1 eine Lichtschranke 14 mit dem Lichtstrahl 30.1. Weiter bildet der Lichtsender 10.1 mit dem Lichtempfänger 12.2 eine Lichtschranke 14 mit dem Lichtstrahl 30.2. Der Lichtsender 10.2 bildet mit dem Lichtempfänger 12.1 eine Lichtschranke 14 mit dem Lichtstrahl 30.3 und der Lichtsender 10.2 bildet mit dem Lichtempfänger 12.2 eine Lichtschranke 14 mit dem Lichtstrahl 30.4. Die Lichtstrahlkeule 16 der Lichtschranke 14 aus Lichtsender 10.1 und Lichtempfänger 12.1 ist dabei durch das Objekt 2 teilweise abgedeckt, so dass lediglich der beispielhaft dargestellte Lichtstrahl 30.1 direkt auf den Lichtempfänger 12.1 fällt. Die übrigen Lichtstrahlen 30 der Lichtstrahlkeule 16 werden wie bereits erwähnt, durch das teiltransparente Objekt 2 gestreut bzw. abgedeckt. Eine Reihenfolge der Abdeckung der Lichtstrahlen 30.1, 30.2, 30.3 und 30.4 bzw. Abdeckung der Lichtstrahlkeulen 16 ist dabei abhängig von einer Position des Objektes zwischen dem ersten Gehäuse und dem zweiten Gehäuse. Wird beispielsweise das Objekt näher an den Lichtsendern 10, 10.2 und 10.2 vorbeigeführt, so werden die Lichtstrahlen 30.1, 30.2, 30.3 und 30.3 der Reihe nach unterbrochen. Wird das Objekt jedoch näher an den Lichtempfängern 12, 12.1 und 12.2 vorbeigeführt, so werden die Lichtstrahlen 30.1, 30.3, 30.2 und 30.3 der Reihe nach unterbrochen.

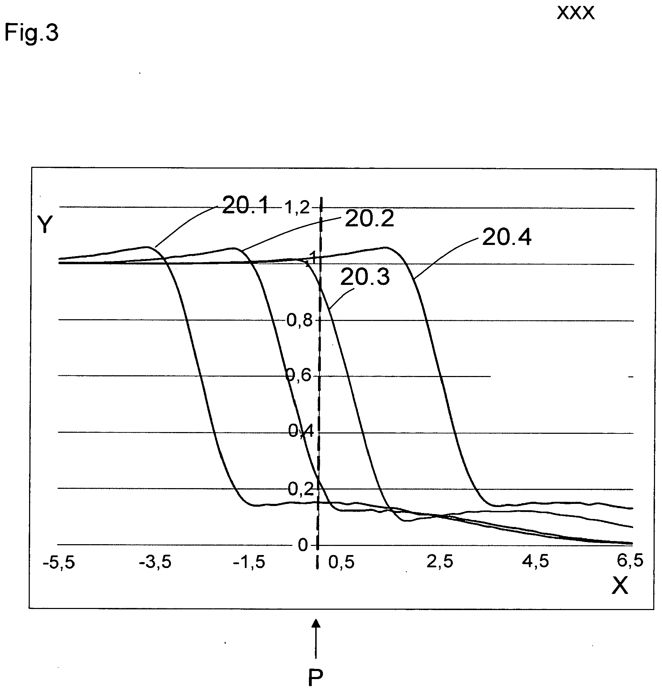

In Figur 3 zeigt eine empfangene Lichtleistung 20.1 bis 20.4 der Lichtschranken 14 mit den Lichtstrahlen 30.1 bis 30.4 gemäß Figur 2. Hierbei ist auf einer X-Achse ein Verfahrweg des Objektes 2 bzw. einer Folie in Millimeter angegeben. Auf der Y-Achse ist die normierte empfangene Lichtleistung angegeben.

Hier treten zunächst zwei Effekte auf. Erstens, die aufstreuende Wirkung des teiltransparenten Objektes 2 zeigt jeweils eine Signalüberhöhung kurz vor der Kante des Objektes 2. Diese ist abhängig von den optischen Eigenschaften des Objektes 2. Zweitens gelangt Licht vom Lichtsender zum Lichtempfänger, wenn das Objekt komplett zwischen Lichtsender und Lichtempfänger liegt, da durch das teiltransparente Objekt Licht vom Lichtsender zum Lichtempfänger gelangt. Diese zwei Effekte führen dazu, dass die Auswertung der Position der Kante des Objektes schwierig ist.

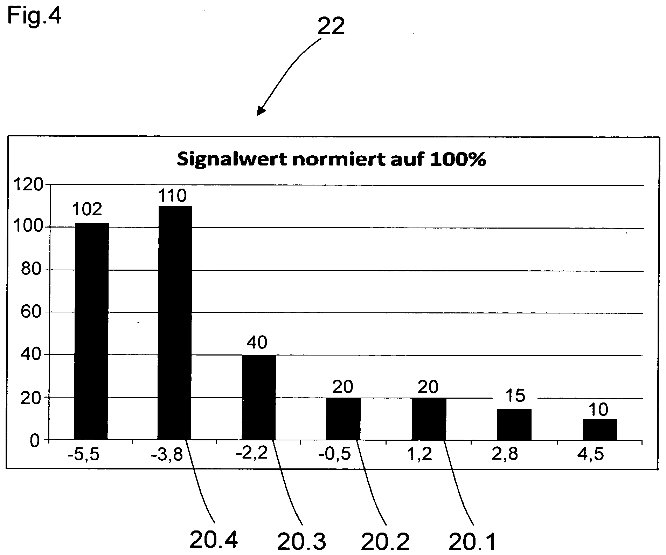

Figur 4 zeigt die statischen Werte der empfangenen Lichtleistung 20.1 bis 20.4 aus Figur 3 als normierte Werte an der Position P, wobei die Lichtstrahlen der Lichtschranken wie in Figur 2 dargestellt, durch das Objekt teilweise abgedeckt sind. Gemäß der Erfindung wird nun ein maximaler Lichtleistungsunterschied 22 einer Lichtstrahlkeule, bzw. einer Lichtleistung einer Lichtschranke und einer übernächsten Lichtschranke bestimmt. Für diesen Bereich wird der Mittelwert der Signaländerung bestimmt und dieser Wert als Schwellwert für die Kantenbestimmung festgelegt.

Dies ist gemäß Figur 4 die Lichtleistung 20.4, also 110% zu der Lichtleistung 20.2, also 20%. Bei dieser Rechenvorschrift wird beispielsweise kein Wert über 100% zugelassen, so dass der Wert von 110% auf 100% reduziert, bzw. gekappt wird. Damit ergibt sich ein Schwellwert von (100%+20%)/2 = 60%.

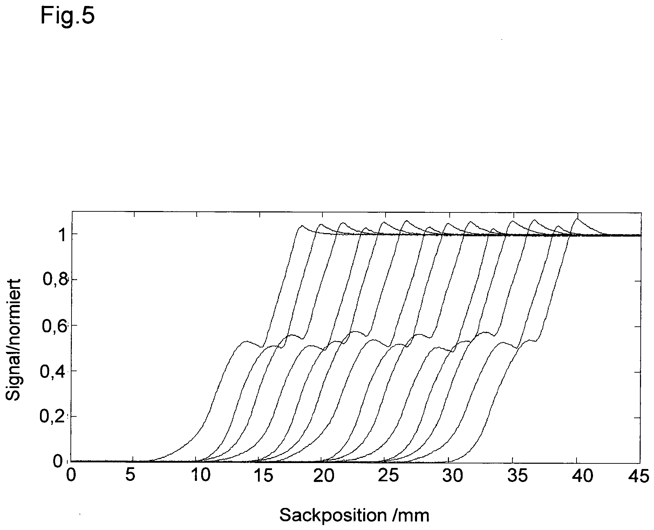

Figur 5 zeigt eine ähnliche Kurvenschar wie Figur 3, wobei jedes Lichtleistungssignal jeder Lichtschranke im Bereich der Kante zwei Signalüberhöhungen aufweisen.

Bei einer Realisierung der Erfindung sollten die Strahlkeulen im Durchmesser kleiner sein als die Struktur des Objektmaterials des Objektes, beispielsweise Überstände einer Folie oder Bedruckungen einer Folie.

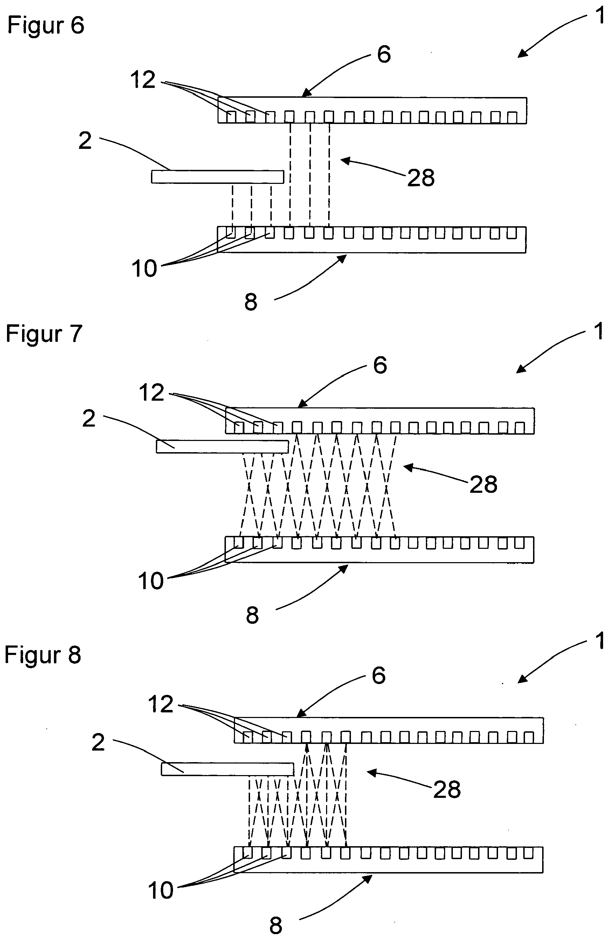

Die Figur 6 bis 8 zeigen verschiedene Ausführungen des Lichtgitters gemäß der Erfindung. Bei dem Lichtgitter gemäß Figur 6 sind die Lichtachsen bzw. die Lichtstrahlkeulen der Lichtschranken des Lichtgitters parallel zueinander.

Gemäß Figur 7 sind die Lichtachsen 28 bzw. Lichtstrahlkeulen der Lichtschranken des Lichtgitters 1 gekreuzt zueinander, wobei zwei Lichtsender 10 und ein Lichtempfänger 12 oder zwei Lichtempfänger 12 und ein Lichtsender 10 jeweils eine Lichtschranke bilden. Gemäß Figur 7 ist das Objekt 2 außerhalb einer Mitte zwischen den Lichtgittergehäusen 6 und 8 des Lichtgitters 1 angeordnet.

Gemäß Figur 8 sind die Lichtachsen 28 bzw. Lichtstrahlkeulen der Lichtschranken des Lichtgitters 1 gekreuzt und parallel zueinander, wobei drei Lichtsender 10 und ein Lichtempfänger 12 oder drei Lichtempfänger 12 und ein Lichtsender 10 jeweils eine Lichtschranke bilden. Auch gemäß Figur 7 ist das Objekt 2 außerhalb einer Mitte zwischen den Lichtgittergehäusen 6 und 8 des Lichtgitters 1 angeordnet. Dadurch ist das Objekt 2 an der Stelle des Lichtgitters 1 angeordnet, an der die Auflösung des Lichtgitters 1 durch die Lichtstrahlkeulen am höchsten ist.

Gemäß den Figuren 7 und 8 wird zwischen einem Lichtsender 10 und mindestens zwei gegenüberliegenden Lichtempfängern 12 jeweils eine Lichtschranke 14 mit jeweils einer Lichtstrahlkeule 16 gebildet, oder zwischen einem Lichtempfänger 12 und mindestens zwei gegenüberliegenden Lichtsendern 10 jeweils eine Lichtschranke 14 mit jeweils einer Lichtstrahlkeule 16 gebildet, wobei die wirksamen Lichtstrahlkeulen 16 der Lichtschranken 14 in einem Winkel zueinander angeordnet sind.

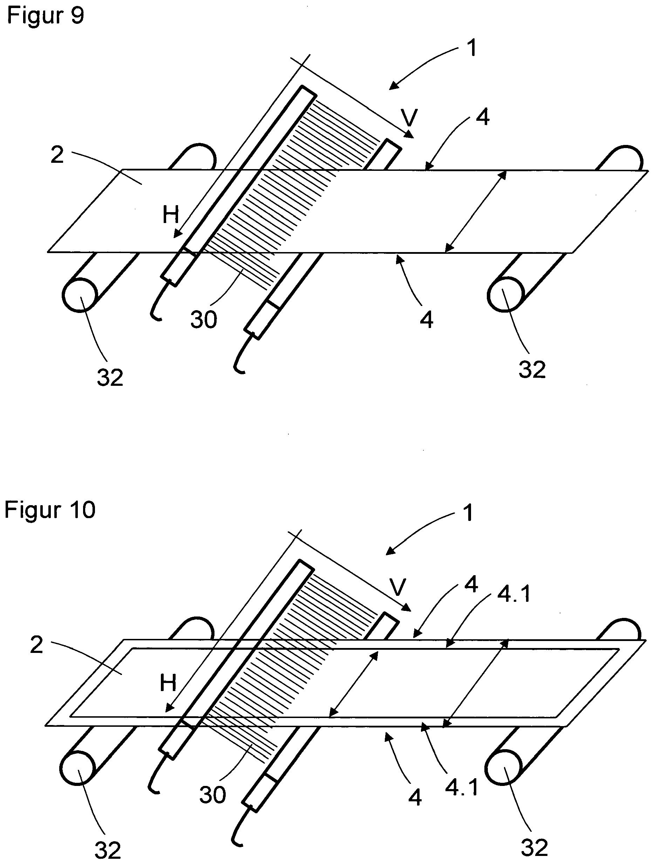

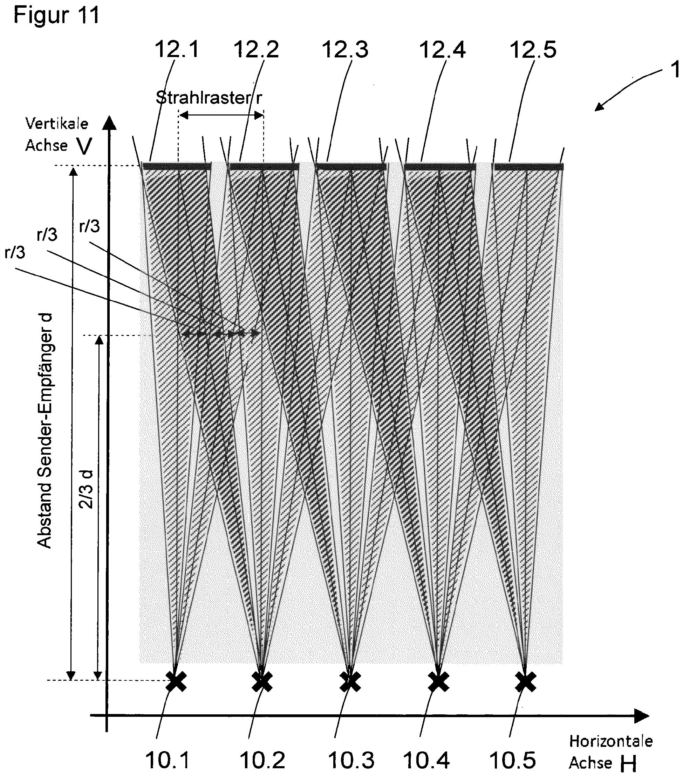

Figur 9 zeigt ein Lichtgitter 1 zur Kantenbestimmung bzw. zur Bestimmung der Kantenposition an einem Objekt 2 mit einem Rollenförderer 32. Das Objekt 2 ist beispielsweise eine Materialbahn aus teiltransparentem Werkstoff. Das Lichtgitter 1 erstreckt sich quer zu dem Objekt 2 bzw. der Materialbahn. Dabei ist eine vertikale Achse V in Richtung der Lichtstrahlen 30 angegeben. Quer zu den Lichtstrahlen 30 ist eine horizontale Achse H angegeben. Diese Achsenbezeichnungen sind auch in den Figuren 11 bis 13 verwendet. Durch das Lichtgitter 1 werden zwei gegenüberliegende Kanten 4 des Objektes 2 gleichzeitig überwacht.

Figur 10 zeigt ein Lichtgitter 1 zur Kantenbestimmung an einem Objekt 2 mit jeweils einer Doppelkante auf jeder Seite des Objektes 2. Dabei ist eine vertikale Achse V in Richtung der Lichtstrahlen 30 angegeben. Quer zu den Lichtstrahlen 30 ist eine horizontale Achse H angegeben. Diese Achsenbezeichnungen sind auch in den Figuren 11 bis 13 verwendet. Das Objekt 2 weist neben der Kante 4 noch eine Kante 4.1 auf. Beispielsweise unterscheidet sich der Transparenzgrad des Objektes 2 zwischen den Kanten 4 und 4.1 zu dem Transparenzgrad des Objektes 2 innerhalb der Kante 4. Dabei ist das Lichtgitter 1 bzw. die Steuer- und Auswerteeinheit dazu ausgebildet, die Kanten 4 bzw. 4.1 gleichzeitig zu überwachen.

Figur 11 zeigt ein Lichtgitter 1 mit schematisch dargestellten Kreuzstrahlen. Das Lichtgitter 1 weist dabei in einem ersten Gehäuse beispielsweise fünf Lichtsender 10.1, 10.2, 10.3, 10.4, 10.5 auf. In einem zweiten Gehäuse sind gegenüberliegend fünf Lichtempfänger 12.1, 12.2, 12.3, 12.4, 12.5 angeordnet. Jeder Lichtsender 10.1, 10.2, 10.3, 10.4, 10.5 bildet dabei mit drei gegenüberliegenden Lichtempfängern eine Lichtachse, so dass Kreuzstrahlen gebildet sind. Die Lichtsender 10.1, 10.2, 10.3, 10.4, 10.5 sind dabei in einem Strahlraster r voneinander beabstandet angeordnet. Auch die Lichtempfänger 12.1, 12.2, 12.3, 12.4, 12.5 sind in einem Strahlraster r voneinander beabstandet angeordnet. Die Lichtsender 10.1, 10.2, 10.3, 10.4, 10.5 sind in einem Abstand d von den Lichtempfängern 12.1, 12.2, 12.3, 12.4, 12.5 angeordnet. Durch die Kreuzstrahlen wird in einem Abstand 2/3 d ausgehend von den Lichtsendern 10.1, 10.2, 10.3, 10.4, 10.5 ein etwa gleichmäßiges Strahlraster mit 1/3 r gebildet. Demnach ist in einem Abstand 2/3 d von den Lichtsendern 10.1, 10.2, 10.3, 10.4, 10.5 ausgehend eine dreimal höhere Auflösung vorhanden als beispielsweise direkt an den Lichtsendern 10.1, 10.2, 10.3, 10.4, 10.5 oder Lichtempfängern 12.1, 12.2, 12.3, 12.4, 12.5. Daher wird bei dem Ausführungsbeispiel gemäß Figur 11 ein Objekt idealerweise im Bereich 2/3 d von den Lichtsendern 10.1, 10.2, 10.3, 10.4, 10.5 aus angeordnet.

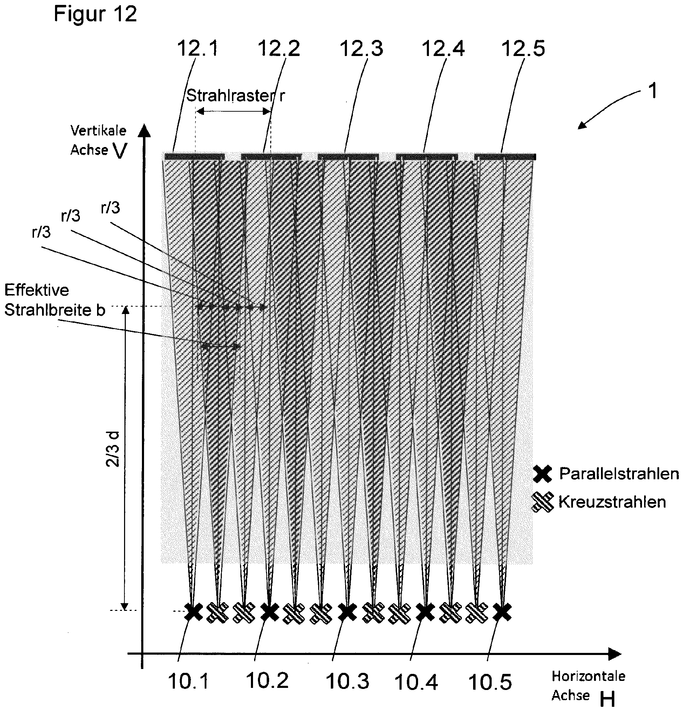

Figur 12 zeigt ein Lichtgitter 1 gemäß Figur 11 mit vereinfacht dargestellten Kreuzstrahlen. Gemäß Figur 12 sind die Kreuzstrahlen aus Figur 11 parallel angeordnet, um die Auflösung des Lichtgitters besser darstellen zu können und um eine modelhafte Darstellung zu erhalten. Dabei ergibt sich eine effektive Strahlbreite b zur Kantendetektion.

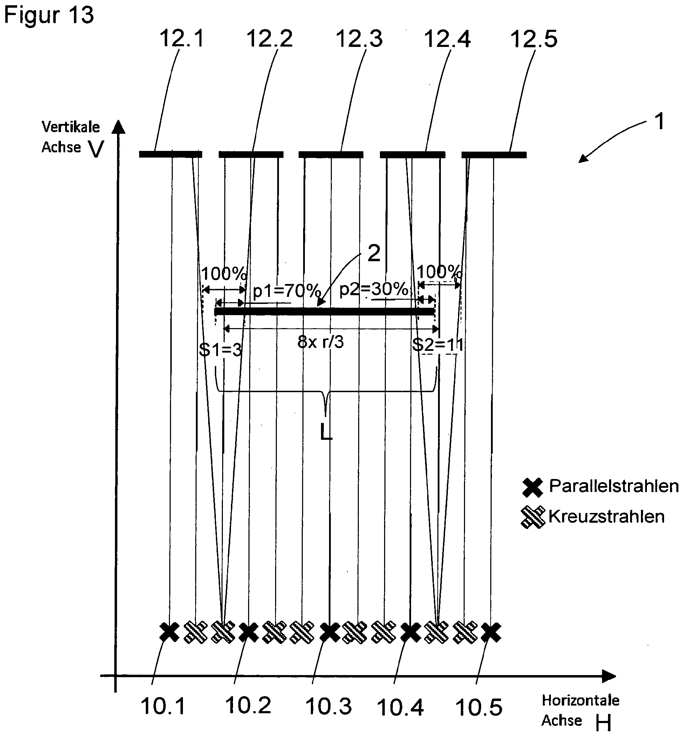

Figur 13 zeigt ein Lichtgitter 1 gemäß Figur 12 mit einem Objekt 2 zur Darstellung der Kantenbestimmung.

Eine Abmessung des Objektes 2 bzw. eine Bahnbreite eines Objektes 2 bzw. einer Bahn an der Position 2/3 d wird anhand folgender Formel bestimmt:

$$L = (S_2 - S_1) \cdot \frac{r}{3} + \left( -\frac{b}{2} + (p_1 \cdot b) \right) + \left( -\frac{b}{2} + (p_2 \cdot b) \right)$$

Dabei ist S die Strahlnummer des letzten vollabgedeckten Lichtstrahls bzw. der Lichtstrahlkeule, r der Abstand der Lichtsender bzw. Lichtempfänger von Mitte zu Mitte, b die effektive Breite des Lichtstrahls bzw. der Lichtstrahlkeule auf dem zu vermessenden Objekt 2 bzw. Material, abhängig vom Abstand d zwischen Objekt 2 und Lichtsender, p der Abdeckungsgrad des Lichtstrahls durch das Objekt bzw. die Objektkante und L die Objektabmessung bzw. die Objektbreite bzw. die Bahnbreite.

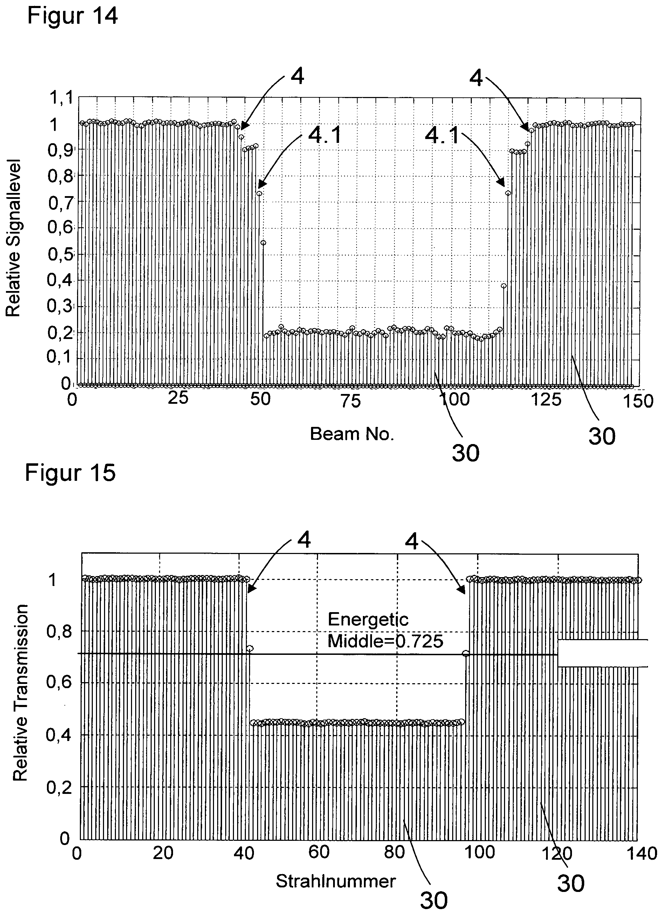

Figur 14 bis 16 zeigen jeweils eine Darstellung der Lichtstrahlen 30 bzw. Lichtachsen bei einer Kantenbestimmung je eines Objektes mit je verschiedenen Transparenzgraden. Dabei sind auf der horizontalen Achse die Lichtstrahlen bzw. Lichtachsen dargestellt. Auf der vertikalen Achse ist ein relativer Signalwert bzw. die relative Transmission der Lichtstrahlen angegeben.

Figur 14 zeigt die Lichtstrahlen eines Lichtgitters gemäß Figur 10. Dabei weist das Objekt jeweils eine Doppelkante auf jeder Seite auf. Das Objekt weist neben den Kanten 4 noch die Kanten 4.1 auf. Beispielsweise unterscheidet sich der Transparenzgrad zwischen den Kanten 4 und 4.1 zu dem Transparenzgrad des Objektes innerhalb der Kante 4. Die Lichtstrahlen 30 werden durch das Objekt zwischen der Kante 4 und 4.1 teilweise abgedeckt. Weiter ist auch der Bereich zwischen den Kanten 4.1 teiltransparent, so dass auch diese Lichtstrahlen im mittleren Bereich der Darstellung gemäß Figur 14 noch mit einer Restlichtstärke auf die Lichtempfänger treffen. Die Transmission des Objektes beträgt beispielsweise 20 % und die Transmission zwischen den Kanten 4 und 4.1 beträgt beispielsweise 90%. Das Lichtgitter gemäß Figur 10 und 14 ist dabei in der Lage, erfindungsgemäß die Kanten 4 und 4.1 zur erfassen und auszuwerten.

Figur 15 zeigt die Lichtstrahlen eines Lichtgitters gemäß Figur 9. Das Objekt 2 ist beispielsweise eine Materialbahn aus teiltransparentem Werkstoff. Das Lichtgitter erstreckt sich quer zu dem Objekt bzw. der Materialbahn. Durch das Lichtgitter 1 werden zwei gegenüberliegende Kanten 4 des Objektes gleichzeitig überwacht. Das Objekt ist dabei selbst teiltransparent, beispielsweise beträgt die Transmission 45 %, so dass die Lichtstrahlen im mittleren Bereich der Darstellung gemäß Figur 15 mit einer Restlichtstärke auf die Lichtempfänger treffen.

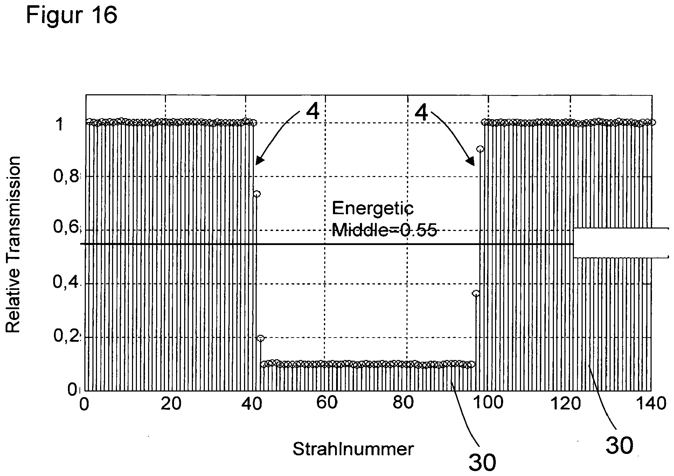

Figur 16 zeigt die Lichtstrahlen eines Lichtgitters gemäß Figur 9, wobei im Unterschied zu Figur 15 das Objekt eine geringere Transparenz aufweist, beispielsweise 10% Transmission. Das Objekt 2 ist beispielsweise eine Materialbahn aus teiltransparentem Werkstoff. Das Lichtgitter erstreckt sich quer zu dem Objekt bzw. der Materialbahn. Durch das Lichtgitter 1 werden zwei gegenüberliegende Kanten 4 des Objektes gleichzeitig überwacht. Das Objekt ist dabei selbst teiltransparent, so dass die Lichtstahlen 30 im mittleren Bereich der Darstellung gemäß Figur 16 mit einer Restlichtstärke auf die Lichtempfänger treffen.

Bezugszeichen:

1 Lichtgitter
2 Objekt
4, 4.1 Kante
6 erstes Gehäuse
8 zweites Gehäuse
10, 10.1, 10.2, 10.3, 10.4, 10.5 Lichtsender
12, 12.1, 12.2, 12.3, 12.4, 12.5 Lichtempfänger
14 Lichtschranke
16 Lichtstrahlkeule
18 Steuer- und Auswerteeinheit
20, 20.1, 20.2, 20.3, 20.4 empfangene Lichtleistung
22 maximaler Unterschied der empfangenen Lichtleistung
26 Schwellwert
28 Lichtachse
30, 30.1, 30.2, 30.3, 30.4 Lichtstrahlen
32 Rollenförderer
r Strahlraster
d Abstand
b Strahlbreite
p Abdeckungsgrad des Lichtstrahls auf dem Objekt
L Objektbreite bzw. Bahnbreite
H horizontale Achse
V vertikale Achse
P Position

**Patentansprüche**

1. Lichtgitter zur Bestimmung mindestens einer Kantenposition von Objekten (2),
   wobei das Lichtgitter (1) ein erstes Gehäuse (6) aufweist mit Lichtsendern (10) und/oder Lichtempfängern (12),
   wobei das Lichtgitter (1) ein zweites Gehäuse (8) aufweist mit Lichtsendern (10) und/oder Lichtempfängern (12),
   wobei jeweils ein Lichtsender (10) des einen Gehäuses (6, 8) und ein Lichtempfänger (12) des anderen Gehäuses (8, 6) gegenüberliegend angeordnet sind, wobei zwischen einem Lichtsender (10) und mindestens einem gegenüberliegenden Lichtempfänger (12) eine Lichtschranke (14) mit einer Lichtstrahlkeule (16) gebildet ist,
   wobei sich die Lichtstrahlkeulen benachbarter Lichtschranken überdecken, wobei eine Steuer- und Auswerteeinheit (18) vorgesehen ist, wobei die Steuer- und Auswerteeinheit (18) dazu ausgebildet ist, die Lichtstrahlkeulen (16) der Lichtschranken (14) einzeln zu aktivieren,

**wobei**

die Steuer- und Auswerteeinheit (18) dazu ausgebildet ist, eine empfangene Lichtleistung (20) bei freier, nicht unterbrochener Lichtstrahlkeule (16) zwischen Lichtsender (10) und Lichtempfänger (12) auf einen Wert zu normieren,

die Steuer- und Auswerteeinheit (18) dazu ausgebildet ist, die Lichtleistung (20) der Lichtstrahlkeulen (16) zu bestimmen, wenn ein Objekt (2) zwischen dem ersten Gehäuse (6) und dem zweiten Gehäuse (8) angeordnet ist, und einen maximalen Unterschied der empfangenen Lichtleistung (22) einer Lichtstrahlkeule (16) einer Lichtschranke (14) und mindestens einer übernächsten Lichtstrahlkeule (16) einer anderen Lichtschranke (14) zu bestimmen, wobei die Steuer- und Auswerteeinheit (18) alle Lichtschranken (14) des Lichtgitters (1) berücksichtigt, **dadurch gekennzeichnet, dass** zur Bestimmung der Kantenposition die Steuer- und Auswerteeinheit (18) dazu ausgebildet ist, eine Teilabdeckung mindestens einer Lichtschranke (14) auszuwerten, wobei die auszuwertende Lichtschranke (14) oder die auszuwertenden Lichtschranken (14) zwischen den Lichtschranken (14) mit dem maximalen Unterschied der empfangenen Lichtleistung (22) liegt bzw. liegen, wobei die Steuer- und Auswerteeinheit (18) dazu ausgebildet ist, zur Bestimmung der Kantenposition einen Schwellwert zu bilden, wobei der Schwellwert zwischen der Lichtleistung der Lichtstrahlkeule (16) einer Lichtschranke (14) und der Lichtleistung (20) der übernächsten Lichtstrahlkeule (16) einer Lichtschranke (14) liegt, die einen maximalen Unterschied der empfangenen Lichtleistung (22) zueinander aufweisen.

2. Lichtgitter nach einem der vorhergehenden Ansprüche, **dadurch gekennzeichnet, dass** die Steuer- und Auswerteeinheit (18) dazu ausgebildet ist, zur Bestimmung der Kantenposition einen Schwellwert (26) zu bilden, wobei der Schwellwert (26) ein Mittelwert ist aus der Lichtleistung (20) der Lichtstrahlkeule (16) einer Lichtschranke (14) und der Lichtleistung (20) der übernächsten Lichtstrahlkeule (16) einer Lichtschranke (14), die einen maximalen Unterschied der empfangenen Lichtleistung (22) zueinander aufweisen.

3. Lichtgitter nach einem der vorhergehenden Ansprüche, **dadurch gekennzeichnet, dass** vor den Lichtsendern bzw. Lichtempfängern eine Optik angeordnet ist, wobei die Optiken in Richtung einer Längsachse der Gehäuse überlappend angeordnet sind.

4. Lichtgitter nach einem der vorhergehenden Ansprüche, **dadurch gekennzeichnet, dass** zwischen einem Lichtsender (10) und mindestens zwei gegenüberliegenden Lichtempfängern (12) jeweils eine Lichtschranke (14) mit jeweils einer Lichtstrahlkeule (16) gebildet ist,
oder zwischen einem Lichtempfänger (12) und mindestens zwei gegenüberliegenden Lichtsendern (10) jeweils eine Lichtschranke (14) mit jeweils einer Lichtstrahlkeule (16) gebildet ist,
wobei die wirksamen Lichtstrahlkeulen (16) der Lichtschranken (14) in einem Winkel zueinander angeordnet sind.

5. Lichtgitter nach einem der vorhergehenden Ansprüche, **dadurch gekennzeichnet, dass** das Objekt (2) außerhalb einer Mitte zwischen den Lichtgittergehäusen (6, 8) des Lichtgitters (1) angeordnet ist.

6. Verfahren zur Bestimmung mindestens einer Kantenposition von Objekten (2) mit einem Lichtgitter (1),
wobei das Lichtgitter (1) ein erstes Gehäuse (6) aufweist mit Lichtsendern (10) und/oder Lichtempfängern (12),
wobei das Lichtgitter (1) ein zweites Gehäuse (8) aufweist mit Lichtsendern (10) und/oder Lichtempfängern (12),
wobei jeweils ein Lichtsender (10) des einen Gehäuses (6, 8) und ein Lichtempfänger (12) des anderen Gehäuses (8, 6) gegenüberliegend angeordnet werden,
wobei zwischen einem Lichtsender (10) und mindestens einem gegenüberliegenden Lichtempfänger (12) eine Lichtschranke (14) mit einer Lichtstrahlkeule (16) gebildet wird,
wobei sich die Lichtstrahlkeulen benachbarter Lichtschranken überdecken, wobei die Lichtstrahlkeulen (16) der Lichtschranken (14) einzeln aktiviert werden,
**wobei**
eine empfangene Lichtleistung (20) bei freier, nicht unterbrochener Lichtstrahlkeule zwischen Lichtsender (10) und Lichtempfänger (12) auf einen Wert normiert werden,
die Lichtleistung (20) der Lichtstrahlkeulen (16) bestimmt werden, wenn ein Objekt (2) zwischen dem ersten Gehäuse (6) und dem zweiten Gehäuse (8) angeordnet ist,
und ein maximaler Unterschied der empfangenen Lichtleistung (22) einer Lichtstrahlkeule (16) einer Lichtschranke (14) und mindestens einer übernächsten Lichtstrahlkeule (16) einer anderen Lichtschranke (14) bestimmt wird,
wobei alle Lichtschranken (14) des Lichtgitters (1) berücksichtigt werden, **dadurch gekennzeichnet, dass** zur Bestimmung der Kantenposition eine Teilabdeckung mindestens einer Lichtschranke (14) ausgewertet wird, wobei die auszuwertende Lichtschranke (14) oder die auszuwertenden Lichtschranken (14) zwischen den Lichtschranken (14) mit dem maximalen Unterschied der empfangenen Lichtleistung (22) liegt bzw. liegen, wobei zur Bestimmung

8

einer Kantenposition ein Schwellwert gebildet wird, wobei der Schwellwert zwischen der Lichtleistung der Lichtstrahlkeule (16) einer Lichtschranke (14) und der Lichtleistung (20) der übernächsten Lichtstrahlkeule (16) einer Lichtschranke (14) liegt, die einen maximalen Unterschied der empfangenen Lichtleistung (22) zueinander aufweisen.

7. Verfahren zur Bestimmung mindestens einer Kantenposition nach Anspruch 6 , **dadurch gekennzeichnet, dass** zur Bestimmung einer Kantenposition ein Mittelwert (22) gebildet wird aus der Lichtleistung (20) der Lichtstrahlkeule (16) einer Lichtschranke (14) und der Lichtleistung (20) der übernächsten Lichtstrahlkeule (16) einer Lichtschranke (14), die einen maximalen Unterschied der empfangenen Lichtleistung (22) zueinander aufweisen.

8. Verfahren zur Bestimmung mindestens einer Kantenposition nach einem der vorhergehenden Ansprüche 6 bis 7, **dadurch gekennzeichnet, dass** vor den Lichtsendern bzw. Lichtempfängern eine Optik angeordnet wird, wobei die Optiken in Richtung einer Längsachse der Gehäuse überlappend angeordnet werden.

9. Verfahren zur Bestimmung mindestens einer Kantenposition nach einem der vorhergehenden Ansprüche 6 bis 8, **dadurch gekennzeichnet, dass** zwischen einem Lichtsender (10) und mindestens zwei gegenüberliegenden Lichtempfängern (12) jeweils eine Lichtschranke (14) mit jeweils einer Lichtstrahlkeule (16) gebildet wird,
oder zwischen einem Lichtempfänger (12) und mindestens zwei gegenüberliegenden Lichtsendern (10) jeweils eine Lichtschranke (14) mit jeweils einer Lichtstrahlkeule (16) gebildet wird,
wobei die wirksamen Lichtstrahlkeulen (16) der Lichtschranken (14) in einem Winkel zueinander angeordnet werden.

10. Verfahren zur Bestimmung mindestens einer Kantenposition nach einem der vorhergehenden Ansprüche 6 bis 9, **dadurch gekennzeichnet, dass** das Objekt (2) außerhalb einer Mitte zwischen den Lichtgittergehäusen (6, 8) des Lichtgitters (1) angeordnet wird.

**Claims**

1. A light grid for determining at least one edge position of objects (2), wherein the light grid (1) has a first housing (6) having light transmitters (10) and/or light receivers (12),
wherein the light grid (1) has a second housing (8) having light transmitters (10) and/or light receivers (12);
wherein a respective light transmitter (10) of the one housing (6, 8) and a light receiver (12) of the other housing (8, 6) are arranged opposite one another, wherein a light barrier (14) having a light beam lobe (16) is formed between a light transmitter (10) and at least one opposite light receiver (12);
wherein the light beam lobes of adjacent light barriers cover one another; wherein a control and evaluation unit (18) is provided, wherein the control and evaluation unit (18) is configured to activate the light beam lobes (16) of the light barriers (14) individually,
**wherein**
the control and evaluation unit (18) is configured to normalize a received light power (20) with a free, non-interrupted light beam lobe (16) between the light transmitter (10) and the light receiver (12) to a value;
the control and evaluation unit (18) is configured to determine the light power (20) of the light beam lobes (16) when an object (2) is arranged between the first housing (6) and the second housing (8);
and to determine a maximum difference of the received light power (22) of a light beam lobe (16) of a light barrier (14) and of at least one next-but-one light beam lobe (16) of another light barrier (14),
wherein the control and evaluation unit (18) takes account of all of the light barriers (14) of the light grid (1), **characterized in that**, to determine the edge position, the control and evaluation unit (18) is configured to evaluate a part coverage of at least one light barrier (14), with the light barrier (14) to be evaluated or the light barriers (14) to be evaluated lying between the light barriers (14) having the maximum difference of the received light power (22), with the control and evaluation unit (18) being configured to form a threshold value for determining the edge position, with the threshold value lying between the light power of the light beam lobe (16) of a light barrier (14) and the light power (20) of the next-but-one light beam lobe (16) of a light barrier (14), said light barriers having a maximum difference of the received light power (22) from one another.

2. A light grid in accordance with the preceding claim, **characterized in that** the control and evaluation unit (18) is configured to form a threshold value (26) for determining the edge position, with the threshold value (26) being a mean value of the light power (20) of the light beam lobe (16) of a light barrier (14) and of the light power (20) of the next-but-one light beam lobe (16) of a light barrier (14), said light barriers having a maximum difference of the received light power (22) from one another.

**3.** A light grid in accordance with one of the preceding claims, **characterized in that** an optics is arranged in front of the light transmitters or light receivers, with the plurality of optics being arranged overlapping in the direction of a longitudinal axis of the housings.

**4.** A light grid in accordance with any one of the preceding claims, **characterized in that** a respective light barrier (14) having a respective light beam lobe (16) is formed between a light transmitter (10) and at least two oppositely disposed light receivers (12);
or **in that** a respective light barrier (14) having a respective light beam lobe (16) is formed between a light receiver (12) and at least two oppositely disposed light transmitters (10); and
with the effective light beam lobes (16) of the light barriers (14) being arranged at an angle with respect to one another.

**5.** A light grid in accordance with any one of the preceding claims, **characterized in that** the object (2) is arranged outside a center between the light grid housings (6, 8) of the light grid (1).

**6.** A method of determining at least one edge position of objects (2) using a light grid (1),
wherein the light grid (1) has a first housing (6) having light transmitters (10) and/or light receivers (12);
wherein the light grid (1) has a second housing (8) having light transmitters (10) and/or light receivers (12);
wherein a respective light transmitter (10) of the one housing (6, 8) and a light receiver (12) of the other housing (8, 6) are arranged opposite one another; wherein a light barrier (14) having a light beam lobe (16) is formed between a light transmitter (10) and at least one opposite light receiver (12);
wherein the light beam lobes of adjacent light barriers cover one another, with the light beam lobes (16) of the light barriers (14) being activated individually,
**wherein**
a received light power (20) is normalized with a free, non-interrupted light beam lobe between the light transmitter (10) and the light receiver (12) to a value;
the light power (20) of the light beam lobes (16) are determined when an object (2) is arranged between the first housing (6) and the second housing (8);
and a maximum difference of the received light power (22) of a light beam lobe (16) of a light barrier (14) and of at least one next-but-one light beam lobe (16) of another light barrier (14);
wherein all of the light barriers (14) of the light grid (1) are taken into account, **characterized in that** a part coverage of least one light barrier (14) is evaluated for determining the edge position, with the light barrier (14) to be evaluated or the light barriers (14) to be evaluated lying between the light barriers (14) having the maximum difference of the received light power (22), with a threshold value being formed for determining an edge position, with the threshold value lying between the light power of the light beam lobe (16) of a light barrier (14) and the light power (20) of the next-but-one light beam lobe (16) of a light barrier (14), said light barriers having a maximum difference of the received light power (22) from one another.

**7.** A method of determining at least one edge position in accordance with claim 6, **characterized in that** a mean value (22) is formed for determining an edge position from the light power (20) of the light beam lobe (16) of a light barrier (14) and from the light power (20) of the next-but-one light beam lobe (16) of a light barrier (14), said light barriers having a maximum difference of the received light power (22) from one another.

**8.** A method of determining at least one edge position in accordance with one of the preceding claims 6 to 7, **characterized in that** an optics is arranged in front of the light transmitters or light receivers, with the plurality of optics being arranged overlapping in the direction of a longitudinal axis of the housings.

**9.** A method of determining at least one edge position in accordance with any one of the preceding claims 6 to 8, **characterized in that** a respective light barrier (14) having a respective light beam lobe (16) is formed between a light transmitter (10) and at least two oppositely disposed light receivers (12);
or **in that** a respective light barrier (14) having a respective light beam lobe (16) is formed between a light receiver (12) and at least two oppositely disposed light transmitters (10),
with the active light beam lobes (16) of the light barriers (14) being arranged at an angle with respect to one another.

**10.** A method of determining at least one edge position in accordance with any one of the preceding claims 6 to 9, **characterized in that** the object (2) is arranged outside a center between the light grid housings (6, 8) of the light grid (1).

**Revendications**

1. Grille lumineuse pour déterminer au moins une position d'arêtes d'objets (2),
   dans laquelle la grille lumineuse (1) comprend un premier boîtier (6) avec des émetteurs de lumière (10) et/ou des récepteurs de lumière (12),
   dans laquelle la grille lumineuse (1) comprend un second boîtier (8) avec des émetteurs de lumière (10) et/ou des récepteurs de lumière (12),
   dans laquelle un émetteur de lumière (10) de l'un des boîtiers (6, 8) et un récepteur de lumière (12) de l'autre boîtier (8, 6) sont respectivement agencés à l'opposé l'un de l'autre,
   dans laquelle une barrière lumineuse (14) avec un lobe de rayonnement lumineux (16) est formée entre un émetteur de lumière (10) et au moins un récepteur de lumière (12) opposé,
   dans laquelle les lobes de rayonnement lumineux de barrières lumineuses voisines se chevauchent,
   dans laquelle il est prévu une unité de commande et d'évaluation (18), ladite unité de commande et d'évaluation étant réalisée pour activer individuellement les lobes de rayonnement lumineux (16) des barrières lumineuses (14),
   dans laquelle
   l'unité de commande et d'évaluation (18) est réalisée pour normaliser une puissance lumineuse reçue (20), pour un lobe de rayonnement lumineux (16) libre et non interrompu entre émetteur de lumière (10) et récepteur de lumière (12), à une valeur,
   l'unité de commande et d'évaluation (18) est réalisée pour déterminer la puissance lumineuse (20) des lobes de rayonnement de lumière (16) quand un objet (2) est agencé entre le premier boîtier (6) et le second boîtier (8), et pour déterminer une différence maximum de la puissance lumineuse reçue (22) d'un lobe de rayonnement de lumière (16) d'une barrière lumineuse (14) et au moins un deuxième lobe suivant de rayonnement de lumière (16) d'une autre barrière lumineuse (14),
   dans laquelle l'unité de commande et d'évaluation (18) prend en compte toutes les barrières lumineuses (14) de la grille lumineuse (1), **caractérisée en ce que** pour la détermination de la position d'arêtes, l'unité de commande et d'évaluation (18) est réalisée pour évaluer un recouvrement partiel d'au moins une barrière lumineuse (14), dans laquelle la ou les barrière(s) lumineuse(s) (14) à évaluer se trouve(nt) entre les barrières lumineuses (14) avec la différence maximum de la puissance lumineuse reçue (22), dans laquelle l'unité de commande et d'évaluation (18) est réalisée, pour déterminer la position d'arêtes, pour former une valeur seuil, ladite valeur seuil étant située entre la puissance lumineuse du lobe de rayonnement de lumière (16) d'une barrière lumineuse (14) et la puissance lumineuse (20) du second lobe suivant de rayonnement de lumière (16) d'une barrière lumineuse (14) qui présentent l'une par rapport à l'autre une différence maximale de la puissance lumineuse reçue (22).

2. Grille lumineuse selon l'une des revendications précédentes, **caractérisée en ce que**, pour déterminer la position d'arêtes, l'unité de commande et d'évaluation (18) est réalisée pour former une valeur seuil (26), dans laquelle la valeur seuil (26) est une valeur moyenne de la puissance lumineuse (20) du lobe de rayonnement lumineux (16) d'une barrière lumineuse (14) et de la puissance lumineuse (20) du second lobe suivant de rayonnement lumineux (16) d'une barrière lumineuse (14), qui présentent l'une par rapport à l'autre une différence maximale de la puissance lumineuse reçue (22).

3. Grille lumineuse selon l'une des revendications précédentes, **caractérisée en ce qu'**une optique est agencée devant les émetteurs de lumière ou devant les récepteurs de lumière, lesdites optiques étant agencées de manière à se chevaucher en direction d'un axe longitudinal des boîtiers.

4. Grille lumineuse selon l'une des revendications précédentes, **caractérisée en ce que**, entre un émetteur de lumière (10) et au moins deux récepteurs de lumière opposés (12), il est formé une barrière lumineuse respective (14) avec un lobe de rayonnement lumineux (16) respectif,
   ou bien entre un récepteur de lumière (12) et au moins deux émetteurs de lumière (10) opposés, il est formé une barrière lumineuse (14) respective avec un lobe de rayonnement lumineux (16) respectif,
   dans laquelle les lobes de rayonnement lumineux (16) efficaces des barrières lumineuses (14) sont agencés sous un angle l'un par rapport à l'autre.

5. Grille lumineuse selon l'une des revendications précédentes, **caractérisé en ce que** l'objet (2) est agencé à l'extérieur d'un milieu entre les boîtiers (6, 8) de la grille lumineuse (1).

6. Procédé pour déterminer au moins une position d'arêtes d'objets (2) au moyen d'une grille lumineuse (1),
   dans lequel la grille lumineuse (1) comprend un premier boîtier (6) avec des émetteurs de lumière (10) et/ou des récepteurs de lumière (12),

dans lequel la grille lumineuse (1) comprend un second boîtier (8) avec des émetteurs de lumière (10) et/ou des récepteurs de lumière (12), dans lequel un émetteur de lumière (10) de l'un des boîtiers (6, 8) et un récepteur de lumière (12) de l'autre boîtier (8, 6) sont agencés respectivement à l'opposé l'un de l'autre,

dans lequel une barrière lumineuse (14) avec un lobe de rayonnement lumineux (16) est formée entre un émetteur de lumière (10) et au moins un récepteur de lumière (12) opposé,

dans lequel les lobes de rayonnement lumineux de barrières lumineuses voisines se chevauchent,

dans lequel les lobes de rayonnement lumineux (16) des barrières lumineuses (14) sont activés individuellement,

dans lequel

une puissance lumineuse reçue (20) est normalisée, pour un lobe de rayonnement lumineux libre et non interrompu entre émetteur de lumière (10) et récepteur de lumière (12), à une valeur,

la puissance lumineuse (20) des lobes de rayonnement lumineux (16) sont déterminées quand un objet (2) est agencé entre le premier boîtier (6) et le second boîtier (8),

et une différence maximale de la puissance lumineuse reçue (22) d'un lobe de rayonnement lumineux (16) d'une barrière lumineuse (14) et d'au moins un second lobe suivant de rayonnement lumineux (16) d'une autre barrière lumineuse (14) est déterminée,

dans lequel toutes les barrières lumineuses (14) de la grille lumineuse (1) sont prises en compte,

**caractérisé en ce que**, pour déterminer la position d'arêtes, on évalue un recouvrement partiel d'au moins une barrière lumineuse (14), dans lequel la ou les barrière(s) lumineuse(s) (14) à évaluer est/sont située(s) entre les barrières lumineuses (14) avec la différence maximum de la puissance lumineuse reçue (22), dans lequel pour déterminer une position d'arêtes on forme une valeur seuil, ladite valeur seuil étant située entre la puissance lumineuse du lobe de rayonnement lumineux (16) d'une barrière lumineuse (14) et la puissance lumineuse (20) du second lobe suivant du rayonnement lumineux (16) d'une barrière lumineuse (14), qui présentent une différence maximum de la puissance lumineuse reçue (22) l'une par rapport à l'autre.

7. Procédé pour la détermination d'au moins une position d'arêtes selon la revendication 6, **caractérisé en ce que** pour déterminer une position d'arêtes on forme une valeur moyenne (22) à partir de la puissance lumineuse (20) du lobe de rayonnement lumineux (16) d'une barrière lumineuse (14) et de la puissance lumineuse (20) du second lobe suivant du rayonnement lumineux (16) d'une barrière lumineuse (14), qui présentent une différence maximale de la puissance lumineuse reçue (22) l'une par rapport à l'autre.

8. Procédé pour la détermination d'au moins une position d'arêtes selon l'une des revendications précédentes 6 et 7, **caractérisé en ce qu'**une optique est agencée devant les émetteurs de lumière ou les récepteurs de lumière, lesdites optiques étant agencées de manière à se chevaucher en direction d'un axe longitudinal des boîtiers.

9. Procédé pour la détermination d'au moins une position d'arêtes selon l'une des revendications précédentes 6 à 8, **caractérisé en ce qu'**une barrière lumineuse respective (14) avec un lobe de rayonnement lumineux respectif (16) est formée entre un émetteur de lumière (10) et au moins deux récepteurs de lumière (12) opposés, ou bien une barrière lumineuse respective (14) avec un lobe de rayonnement lumineux respectif (16) est formée entre un récepteur de lumière (12) et au moins deux émetteurs de lumière (10) opposés, dans lequel les lobes de rayonnement lumineux efficaces (16) des barrières lumineuses (14) sont agencés sous un angle l'un par rapport à l'autre.

10. Procédé la détermination d'au moins une position d'arêtes selon l'une des revendications précédentes 6 à 9, **caractérisé en ce que** l'objet (2) est agencé à l'extérieur d'un milieu entre les boîtiers (6, 8) de la grille lumineuse (1).

Fig.1

Fig.2

**Fig.3**

XXX

Fig.4

22

**Signalwert normiert auf 100%**

| | | | | | | |
|---|---|---|---|---|---|---|
| 102 | 110 | 40 | 20 | 20 | 15 | 10 |
| -5,5 | -3,8 | -2,2 | -0,5 | 1,2 | 2,8 | 4,5 |

20.4  20.3  20.2  20.1

Fig.5

Figur 6

Figur 7

Figur 8

## Figur 9

## Figur 10

Figur 11

## Figur 12

Figur 13

## Figur 14

## Figur 15

Figur 16

**EP 2 985 564 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10038025 A1
- JP 2011130258 A
- US 2011290989 A1